(19) **Europäisches Patentamt / European Patent Office / Office européen des brevets**

(11) **EP 4 715 200 A1**

(12) **EUROPEAN PATENT APPLICATION**

(43) Date of publication:
25.03.2026 Bulletin 2026/13

(21) Application number: 25200832.1

(22) Date of filing: 08.09.2025

(51) International Patent Classification (IPC):
*F03D 15/00* (2016.01)　　　*F03D 17/00* (2016.01)
*F03D 80/50* (2016.01)

(52) Cooperative Patent Classification (CPC):
**F03D 15/00; F03D 17/011; F03D 17/012;**
**F03D 17/029; F03D 80/50;** F05B 2260/4031

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **18.09.2024 JP 2024161475**

(71) Applicant: **Nabtesco Corporation**
**Tokyo 102-0093 (JP)**

(72) Inventors:
• **Nohara, Osamu**
**Chiyoda-ku, Tokyo (JP)**
• **Hosoda, Shigeru**
**Chiyoda-ku, Tokyo (JP)**

(74) Representative: **Grünecker Patent- und**
**Rechtsanwälte**
**PartG mbB**
**Leopoldstraße 4**
**80802 München (DE)**

(54) **LOAD MEASURING SYSTEM, DAMAGE PROBABILITY ESTIMATING SYSTEM, LIFESPAN PREDICTING SYSTEM, LOAD MEASURING METHOD, DAMAGE PROBABILITY MONITORING METHOD AND PROGRAM**

(57)　It is determined which of the teeth of a ring gear are subject to a load and to what extent the load is exerted. A load measuring system includes: a load detecting part for use in a moving part of a wind turbine, the moving part including a ring gear with a plurality of teeth and at least one drive unit with a pinion meshing with the ring gear, the load detecting part being configured to detect an applied load that is exerted on a tooth of the ring gear due to application of an external force or a driving force of the drive unit via the pinion with the ring gear meshing with the pinion; and a position identifying part for identifying, from among the teeth of the ring gear, a target tooth subject to the applied load.

Fig. 5

EP 4 715 200 A1

## Description

### CROSS-REFERENCE TO RELATED APPLICATIONS

This application is based on and claims the benefit of priority from Japanese Patent Application Serial No. 2024-161475 (filed on September 18, 2024), the contents of which are hereby incorporated by reference in their entirety.

### TECHNICAL FIELD

The present disclosure relates to a load measuring system, a damage probability estimating system, a lifespan predicting system, a load measuring method, a damage probability monitoring method, and a non-transitory computer-readable storage medium.

### BACKGROUND

It is known that conventional wind power generating systems are provided with moving parts to enable the wind power generating systems to conduct wind power generation and enhance the power generation efficiency. For example, some of known wind power generating systems have a yaw control function for adjusting the orientation of the nacelle in accordance with the wind direction. Such wind power generating systems are provided with moving parts for enabling yaw control. An example of such wind power generating systems is disclosed in Japanese Patent Application Publication No. 2015-140777 ("the '777 Publication"). The wind power generating system disclosed in the '777 Publication is installed on the land or on the ocean, and it includes a tower serving as a support post for a power generator, a nacelle disposed on top of the tower and having the power generator enclosed therein, and a rotor disposed on one of the ends of the nacelle and made up by a hub and blades for capturing wind and converting the captured wind into rotational energy. The wind power generating system has moving parts to enable yaw control. The moving parts include a yawing gear fixedly attached to the tower, and pinions of a plurality of yaw actuators provided in the nacelle. The wind power generating system performs yaw control or controls the positions of the nacelle and the rotor relative to the tower, by driving the yaw actuators with the yawing gear meshing with the pinions.

A moving part of a wind turbine may have a ring gear and a drive unit including a pinion. When the ring gear is engaged with the pinion, the teeth of the ring gear may be loaded through the pinion. If the teeth of the ring gear remains loaded over a period of time, the loaded teeth of the ring gear can be damaged. There is a need to measure which teeth of the ring gear are subject to a load and how much load is applied to those teeth since such load can cause damage to the ring gear teeth.

## SUMMARY

The present invention has been made in view of such circumstances, and an object of the invention is to determine which teeth of a ring gear are subject to a load and to measure how much load is applied to those teeth.

An embodiment of the invention relates to the following items <1> to <11>.

<1> A load measuring system including: a load detecting part for use in a moving part of a wind turbine, the moving part including a ring gear with a plurality of teeth and at least one drive unit with a pinion meshing with the ring gear, the load detecting part being configured to detect an applied load that is exerted on a tooth of the ring gear due to application of an external force or a driving force of the drive unit via the pinion with the ring gear meshing with the pinion; and a position identifying part for identifying, from among the teeth of the ring gear, a target tooth subject to the applied load.

<2> The load measuring system of <1>, wherein driving of the moving part causes a driven part attached to the drive unit having the pinion to rotate relative to the ring gear, and wherein the position identifying part identifies, from among the teeth of the ring gear, the target tooth subject to the applied load, based on (i) sensor information obtained from a sensor configured to detect a rotational position of the driven part relative to the ring gear and (ii) position information indicating a position of the pinion relative to the driven part.

<3> The load measuring system of <1> or <2>, wherein the position identifying part refers to (i) position information indicating a position of the pinion relative to the ring gear at a first time and (ii) rotation amount information indicating an amount of rotation of the pinion between the first time and a second time to identify, from among the teeth of the ring gear, the target tooth subject to the applied load at the second time.

<4> The load measuring system of any of <1> to <3>, wherein the load detecting part distinguishes and detects separately (i) an applied load that is exerted on a tooth of the ring gear due to application of an external force or a driving force of the drive unit via the pinion with a tooth of the pinion butting up against the tooth of the ring gear from a first side in a circumferential direction of the ring gear and (ii) an applied load that is exerted on a tooth of the ring gear due to application of an external force or a driving force of the drive unit via the pinion with a tooth of the pinion butting up against the tooth of the ring gear from a second side that is opposite to the first side in the circumferential direction.

<5> The load measuring system of any of <1> to <4>, wherein the moving part causes a nacelle of the wind turbine to rotate relative to a tower, and wherein the moving part has a plurality of drive units.

<6> A damage probability estimating system including: the load measuring system of any of <1> to <5>; and a damage probability estimating part for calculating a damage probability of the tooth of the ring gear based on the applied load that is exerted on the tooth of the ring gear and that is measured by the load measuring system during a given period.

<7> The damage probability estimating system of <6>, wherein the damage probability estimating part calculates an average load based on the applied load that is exerted on the tooth of the ring gear and that is measured during the given period by the load measuring system and calculates the damage probability of the tooth of the ring gear based on the average load.

<8> A lifespan predicting system including: the damage probability estimating system of <6> or <7>; and a lifespan predicting part for predicting a lifespan of the tooth of the ring gear based on the damage probability of the tooth of the ring gear calculated by the damage probability estimating system.

<9> A load measuring method including steps of: in a moving part of a wind turbine, the moving part including a ring gear with a plurality of teeth and a drive unit with a pinion meshing with the ring gear, detecting an applied load that is exerted on a tooth of the ring gear due to application of an external force or a driving force of the drive unit via the pinion with the ring gear meshing with the pinion; and identifying, from among the teeth of the ring gear, a target tooth subject to the applied load.

<10> A damage probability monitoring method comprising steps of: measuring the applied load that is exerted on the tooth of the ring gear during a given period using the load measuring method of <9>; calculating a damage probability of the tooth of the ring gear based on the applied load that is exerted on the tooth of the ring gear and that is measured during the given period in the measuring; and issuing an alert when the damage probability calculated in the calculating is equal to or greater than a threshold value.

A program for causing a computer to execute a load measuring method, the load measuring method including steps of: in a moving part of a wind turbine, the moving part including a ring gear with a plurality of teeth and a drive unit with a pinion meshing with the ring gear, detecting an applied load that is exerted on a tooth of the ring gear due to application of an external force or a driving force of the drive unit via the pinion with the ring gear meshing with the pinion; and identifying, from among the teeth of the ring gear, a target tooth subject to the applied load.

## ADVANTAGEOUS EFFECTS

The present invention makes it possible to determine which teeth of a ring gear are subject to a load and to measure how much load is exerted on those teeth.

## BRIEF DESCRIPTION OF THE DRAWINGS

Fig. 1 is a perspective view showing an example configuration of a wind turbine according to an embodiment of the invention.
Fig. 2 is a top view of a moving part according to the embodiment of the present invention.
Fig. 3 shows an example configuration of a drive unit and a load detecting part according to the embodiment of the present invention.
Fig. 4 shows a period in which the drive unit is in operation and a period in which the drive unit is suspended, in the embodiment of the present invention.
Fig. 5 illustrates an example configuration of a load measuring system, a damage probability estimating system and a lifespan predicting system according to the embodiment of the present invention.
Fig. 6 shows, as an example, a graph shown on a display part according to the embodiment of the present invention.

## DESCRIPTION OF THE PREFERRED EMBODIMENTS

The following describes in detail a load measuring system 1, a damage probability estimating system 200 and a lifespan predicting system 201 relating to an embodiment of the present disclosure with reference to the appended drawings. The load measuring system 1, the damage probability estimating system 200, and the lifespan predicting system 201 relating to the present embodiment are applied to a moving part 11 of a wind turbine 10.

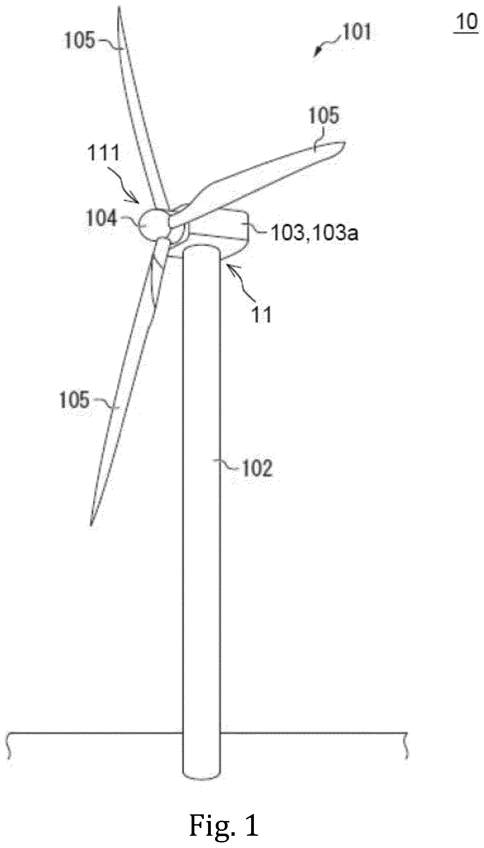

The following first describes the wind turbine 10 to which the load measuring system 1, the damage probability estimating system 200, and the lifespan predicting system 201 relating to the present embodiment are applied. Fig. 1 is a perspective view showing an example of the configuration of the wind turbine 10. The wind turbine 10 includes a wind turbine body 101. The wind turbine body 101 includes a tower 102, a nacelle 103, a rotor (main shaft part) 104, and a plurality of blades (vanes) 105. The tower 102 extends vertically upward from the land or the sea.

The wind turbine 10 includes a moving part 11 in addition to the wind turbine body 101. In the present embodiment, a nacelle 103 is attached to the top of the tower 102 such that the nacelle 103 is rotatable relative to the tower 102. In other words, the connecting portion between the tower 102 and the nacelle 103 constitutes the moving part 11 configured to rotate the nacelle 103 relative to the tower 102. The moving part 11 drives the nacelle 103 of the wind turbine 10 such that the nacelle 103 rotates about the longitudinal axis of the tower 102. In other words, the moving part 11 causes the nacelle 103 of the wind turbine 10 to rotate in the yaw direction (YAW) relative to the tower 102. The tower 102 extends in the vertical direction. The moving part 11 thus drives the nacelle 103 such that the nacelle 103 rotates about an axis extending in the vertical direction.

The rotor 104 rotates in the roll direction (ROLL) relative to the nacelle 103. The plurality of (e.g., three) blades 105 are provided on the rotor 104 at equal angular intervals so as to extend radially from the axis of the rotation in the roll direction.

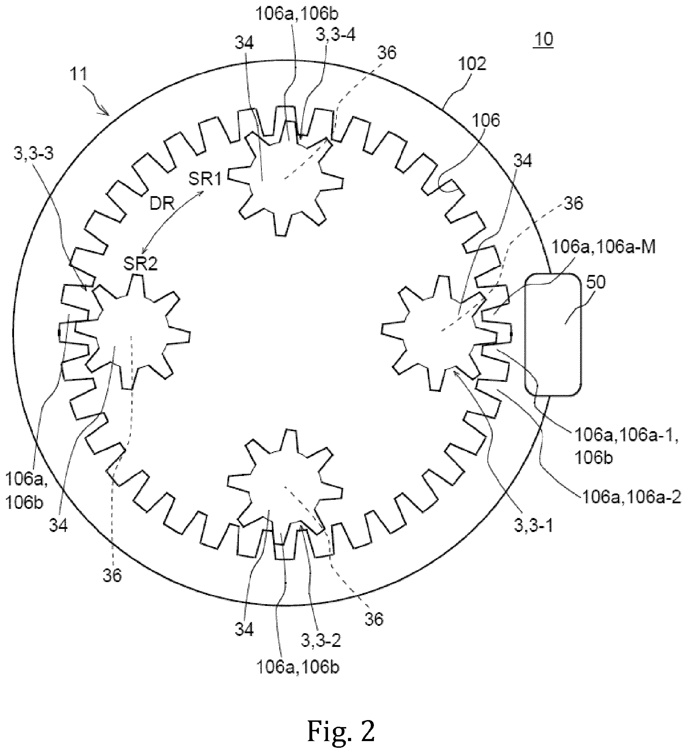

Fig. 2 is a top view of the moving part 11 of the wind turbine 10 according to the embodiment. The moving part 11 relating to the present embodiment includes a ring gear 106 and one or more drive units 3.

The ring gear 106 has a plurality of teeth 106a. In the example shown in Fig. 2, the ring gear 106 is assembled onto the top portion of the tower 102. In this case, the teeth 106a of the ring gear 106 may be provided on the inner periphery. Although not shown, the teeth 106a of the ring gear 106 may be provided on the outer periphery.

The drive units 3 each include a pinion 34 meshing with the ring gear 106. In the example shown in Fig. 2, each drive unit 3 has the pinion 34 and an actuator 36 for driving the pinion 34. According to the example shown in Fig. 2, the moving part 11 has a plurality of drive units 3. Specifically, the moving part 11 has four drive units 3. The four drive units 3 are referred to as drive units 3-1, 3-2, 3-3, and 3-4. The drive units 3 may be collectively referred to simply as "the drive units 3."

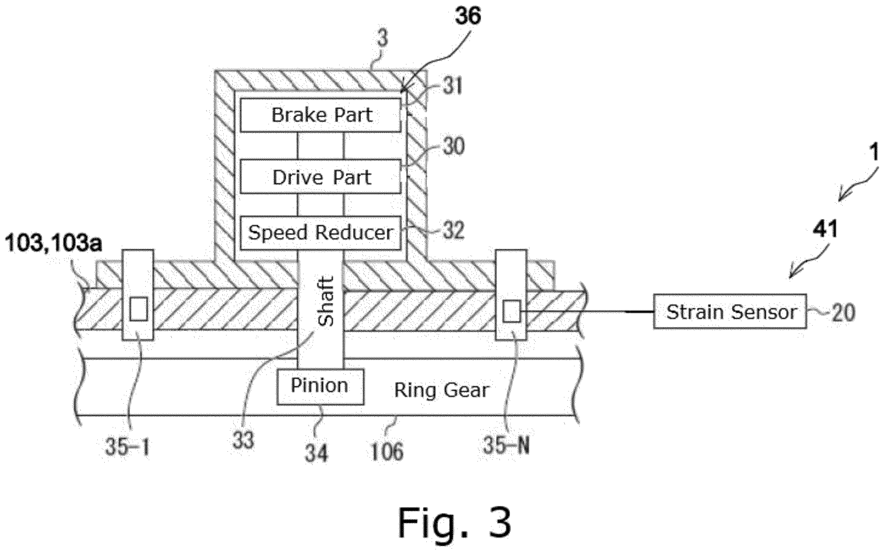

Fig. 3 shows an example of the configuration of each drive unit 3, together with an example of the configuration of a load detecting part 41 of the load measuring system 1. In the example shown in Fig. 3, the ring gear 106 is positioned on the top portion of the tower 102.

A driven part 103a refers to the component to which the drive units 3 are attached. In the example shown in Fig. 3, the drive units 3 are attached to the nacelle 103. Therefore, in the example shown in Fig. 3, the nacelle 103 is the driven part 103a. For example, the drive units 3 are attached inside the nacelle 103. Although not shown, the nacelle 103 may include a ring gear corresponding to the ring gear 106, and the tower 102 may include drive units corresponding to the drive units 3. In other words, the tower 102 may correspond to the driven part 103a.

The drive units 3 are configured to drive the moving part 11. In the example shown in Fig. 2, the drive units 3 cooperatively operate to drive the moving part 11. As the moving part 11 is driven, the driven part 103a, to which the drive units 3 with the pinions 34 are attached, rotates with respect to the ring gear 106. In the present embodiment, driving the moving part 11 causes the nacelle 103 to rotate relative to the tower 102. In the present embodiment, the actuators 36 of the drive units 3 generate a yaw driving force. With the ring gear 106 meshing with the pinions 34 of the drive units 3, the actuators 36 may be driven. As a result, the drive units 3 use the driving force of the actuators 36 to rotate in the circumferential direction DR of the ring gear 106 shown in Fig. 2. The drive units 3 can rotate toward a first side SR1 in the circumferential direction DR. The drive units 3 can rotate toward a second side SR2 in the circumferential direction DR.

The moving part 11 may include a brake that is configured to apply a braking force to slow down the rotation of the driven part 103a relative to the ring gear 106. In the present embodiment, the moving part 11 includes a hydraulic brake for applying a braking force to slow down the rotation of the driven part 103a relative to the ring gear 106. The hydraulic brake is, for example, a caliper brake mechanism. The hydraulic brake includes a hydraulic brake driving part (not shown) and a friction member 50 shown in Fig. 2. The hydraulic brake driving part is fixedly attached to the driven part 103a. The hydraulic brake driving part moves the friction member 50 in the direction perpendicular to the page of Fig. 2 (the direction in which shafts 33 of the actuators 36 extend, the shafts 33 will be described below) in accordance with a control signal provided from outside. The hydraulic brake driving part applies a braking force to slow down the rotation of the driven part 103a relative to the ring gear 106 by pressing the friction member 50 against the ring gear 106. The wind turbine 10 is preferably capable of adjusting the braking force and applying the adjusted braking force.

The drive units 3 are fixedly attached to the driven part 103a with N bolts 35 (N is an integer greater than or equal to 2). The N bolts 35 are arranged annually. In the present embodiment, the drive units 3 are fixedly attached to the nacelle 103 using the bolts 35.

The actuators 36 each include a drive part 30, a brake part 31, a speed reducer 32, and a shaft 33. The speed reducer 32 includes gears serving as a speed reducing mechanism. The pinion 34 is positioned at the end of the shaft 33 so as to mesh with the ring gear 106. The bolts 35-1 to 35-N are members for fixedly attaching the drive units 3 to the nacelle 103. As will be described below, when the ring gear 106 is engaged with the pinions 34, both the teeth 106a of the ring gear 106 and the teeth of the pinions 34 may be subject to a load. How both the teeth 106a of the ring gear 106 and the teeth of the pinions 34 are subject to a load will be described in detail below. The load may cause the bolts 35 to undergo strain.

The drive part 30 is a motor. The drive part 30 rotates the shaft 33 about its longitudinal direction in accordance with the voltage or electric current supplied to the drive part 30. The actuator 36 includes the brake part 31 for applying a braking force to reduce the rotation of the shaft 33. In the present embodiment, the brake part 31 is configured to reduce the rotational speed of the shaft 33 via an electromagnetic brake. The brake part 31 may use the electromagnetic brake to keep the shaft 33 suspended from rotating. The speed reducer 32 sets the rotational speed of the shaft 33 by the gears included in the speed reducer 32.

The shaft 33 is driven by the drive part 30 to rotate at a rotational speed that is determined by the speed reducer 32. The shaft 33 is driven by the drive part 30 to rotate with a predetermined torque (shaft torque). The pinion 34 rotates in mesh with the internal teeth of the ring gear 106 in accordance with the amount of rotation of the shaft 33. This causes the driven part 103a to rotate relative to the ring gear 106. In the present embodiment, it is the nacelle 103 that rotates relative to the tower 102.

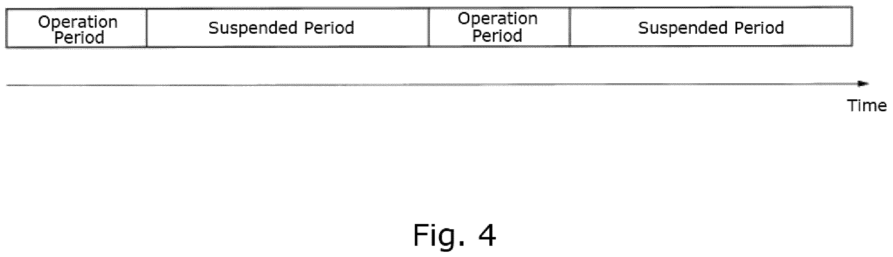

Fig. 4 shows periods in which the drive unit 3 is in two different modes, in accordance with the present embodiment. The wind turbine 10 is in different modes between an operation period in which the drive unit 3 is in operation and a suspended period in which the drive unit 3 is suspended, as shown in Fig. 4, for example. In the operation period, the orientation of the nacelle 103 is moved based on the direction of wind. In the suspended period, the orientation of the nacelle 103 is fixed. During the operation period, the drive unit 3 moves the nacelle 103 to a target position relative to the tower 102. During the suspended period, the drive unit 3 keeps the nacelle 103 stationary at the target position relative to the tower 102. The target position is the optimal position of the nacelle 103 relative to the tower 102 determined based on the wind direction.

At the start timing of the operation period, the drive unit 3 moves the nacelle 103 to a target position relative to the tower 102. The drive unit 3 positions the nacelle 103 at the target position by the end timing of the operation period. The drive unit 3 causes the braking force to be generated so as to keep the nacelle 103 stationary at the target position during the suspended period.

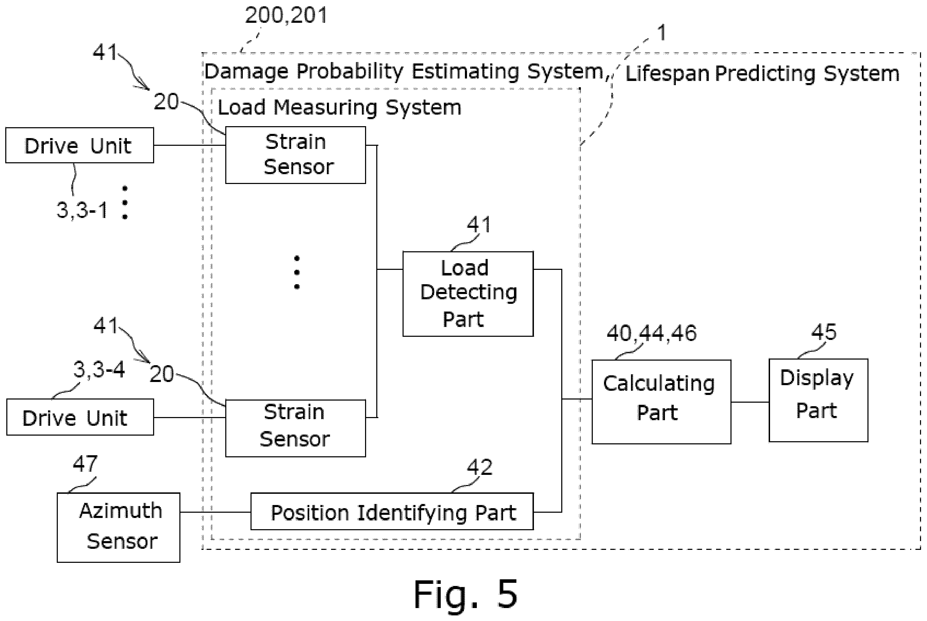

The wind turbine 10 relating to the present embodiment further includes a sensor 47 for detecting the rotational position of the driven part 103a relative to the ring gear 106, which is illustrated in Fig. 5 and below. The sensor 47 is also referred to as the azimuth sensor 47. For example, the azimuth sensor 47 detects an angle α, which will be described below. The driven part 103a can be placed at several positions relative to the ring gear 106, and one of the positions is defined as the reference position. To move the driven part 103a from the reference position to a current position, the driven part 103a needs to be rotated by the angle α. More specifically, the azimuth sensor 47 relating to the present embodiment detects the rotational position of the nacelle 103, that is, the driven part 103a, with respect to the ring gear 106. The wind turbine 10 relating to the present embodiment also includes a wind direction sensor for detecting the direction of the wind. The wind turbine 10 relating to the present embodiment determines a target position to which the nacelle 103 is moved in the operation period, which is described above, based on the rotational position of the nacelle 103 relative to the ring gear 106 as detected by the azimuth sensor 47 and the wind direction as detected by the wind direction sensor.

In the moving part 11 of the wind turbine 10, when the ring gear 106 is engaged with the pinions 34, both the teeth 106a of the ring gear 106 and the teeth of the pinions 34 may be subject to loads. Referring to the example shown in Fig. 2, loads can be applied from the pinions 34 to those of the teeth 106a of the ring gear 106 that butt up against the teeth of the pinions 34 due to the engagement between the ring gear 106 and the pinions 34.

The loads applied to both the teeth 106a of the ring gear 106 and the teeth of the pinions 34 are now described more specifically. In the operation period described above, the drive units 3 can drive the moving part 11 by driving the pinions 34 with the ring gear 106 meshing with the pinions 34. In this state, the pinions 34 rotate in mesh with the teeth 106a of the ring gear 106 in accordance with the amount of rotation of the shafts 33. As the driving forces of the drive units 3 are applied through the pinions 34 with the pinions 34 meshing with the ring gear 106, loads are applied from the pinions 34 to the teeth 106a of the ring gear 106 that are engaged with the pinions 34.

Furthermore, loads may be applied to both the teeth 106a of the ring gear 106 and the teeth of the pinions 34 if an external force such as a gust is applied to the ring gear 106, the driven part 103a or the like with the ring gear 106 meshing with the pinions 34. In this case, loads are also applied from the pinions 34 to the teeth 106a of the ring gear 106 that are engaged with the pinions 34. Such loads due to an external force can be applied both during the operation period and the suspended period.

The above-described loads that are applied to the teeth 106a of the ring gear 106 via the pinions 34 with the ring gear 106 meshing with the pinions 34 due to application of an external force or the driving forces of the drive units 3 are hereinafter referred to as applied loads. The teeth 106a on which the applied loads are exerted may be referred to as the target teeth 106b.

When the target teeth 106b of the ring gear 106 are subject to the applied loads as described above, the teeth of the pinions 34 that mesh with the ring gear 106 are also subject to loads corresponding to the applied loads. The loads can act on the fixtures that fixedly attach the drive units 3 to the driven part 103a. The loads apply a tensile stress, a compressive stress and a bending stress to the fixtures that fixedly attach the drive units 3 to the driven part 103a.

The following now describes the load measuring system 1 relating to the embodiment of the present invention. The load measuring system 1 determines which of the teeth 106a of the ring gear 106 are loaded and how much load is applied. The load measuring system 1 determines which of the teeth 106a of the ring gear 106 are subject to the above-described applied loads and to what extent the applied loads are exerted. Fig. 5 is a block diagram showing the load measuring system 1 relating to the present embodiment, as well as the damage probability estimating system 200 and the lifespan predicting system 201 including the load measuring system 1, together with the components of the wind turbine 10. As shown in Fig 5, the load measuring system 1 includes a load detecting part 41 and a position identifying part 42.

For example, the load measuring system 1 includes an IoT device installed on the wind turbine 10. The IoT device is installed in the nacelle 103 of the wind turbine 10. For example, the IoT device included in the load measuring system 1 includes the load detecting part 41 and the position identifying part 42.

The IoT device in the wind turbine 10 may have a control part. The control part is a programmable logic controller (PLC), for example. The control part may include the load detecting part 41 and the position identifying part 42. In other words, the control part may function as the load detecting part 41 and the position identifying part 42.

The IoT device installed in the wind turbine 10 may have an output part for outputting the information obtained by the IoT device. The output part is, for example, the communication gateway of the IoT device. The following describes the case where the IoT device includes the load detecting part 41 and the position identifying part 42, but does not include a calculating part 40, which will be described below. In this case, the IoT device may be connected at its output part to the calculating part 40, described below, via a communication line. The output part of the IoT device may output the information obtained by the load detecting part 41 to the calculating part 40 via the communication line. The output part of the IoT device may output the information of the target teeth 106b identified by the position identifying part 42 to the calculating part 40 via the communication line.

The load detecting part 41 detects the applied loads on the teeth 106a of the ring gear 106 in the moving part 11 of the wind turbine 10. The applied loads on the teeth 106a of the ring gear 106, which are detected by the load detecting part 41, include the applied loads on the teeth 106a of the ring gear 106 that are caused by driving of the pinions 34 of the drive units 3, and the applied loads on the teeth 106a of the ring gear 106 that are caused by application of an external force such as a gust to the wind turbine 10. The applied loads are detected by the load detecting part 41 regardless of whether the pinions 34 of the drive units 3 are in operation or not. While the pinions 34 are in operation, the teeth 106a of the ring gear 106 are subject to the applied loads that are generated by the driving of the pinions 34 and the applied loads that are generated by an external force such as wind. While the pinions 34 are not in operation, the teeth 106a of the ring gear 106 are subject to the applied loads that are generated by an external force such as wind.

Detecting the applied loads on the teeth 106a of the ring gear 106 includes measuring a physical quantity representing the applied loads on the teeth 106a of the ring gear 106. Detecting the applied loads on the teeth 106a of the ring gear 106 includes obtaining information that can be used to derive the applied loads on the teeth 106a of the ring gear 106. The information that can be used to derive the applied loads on the teeth 106a of the ring gear 106 is, for example, information that can be used to estimate the damage probability of the target teeth 106b of the ring gear 106, which will be described below. The information that can be used to derive the applied loads on the teeth 106a of the ring gear 106 may be information that can be used to measure an average load, which will be described below.

The applied loads on the teeth 106a of the ring gear 106 include the applied loads on the teeth 106a of the ring gear 106 that are generated by application of an external force or the driving forces of the drive units 3 via the pinions 34 with the teeth of the pinions 34 butting up against the teeth 106a of the ring gear 106 from a first side SR1 in the circumferential direction DR of the ring gear 106. These applied loads are also referred to as first-side loads. The applied loads on the teeth 106a of the ring gear 106 include the applied loads on the teeth 106a of the ring gear 106 that are generated by application of an external force or the driving forces of the drive units 3 via the pinions 34 with the teeth of the pinions 34 butting up against the teeth 106a of the ring gear 106 from a second side SR2 in the circumferential direction DR of the ring gear 106. These applied loads are also referred to as second-side loads. The load detecting part 41 relating to the present embodiment does not distinguish the first-side loads and the second-side loads when detecting the applied loads.

In the present embodiment, the load detecting part 41 includes a torque sensor. Specifically, the load detecting part 41 includes a plurality of torque sensors provided on the respective drive units 3.

In the example shown in Figs. 3 and 5, the load detecting part 41 includes, as the torque sensors, strain sensors 20, which are configured to measure the amounts of strain in the corresponding bolts 35. The amounts of strain herein refer to the amounts of deformation. A strain sensor 20-n (n is an integer from 1 to N) is provided for a bolt 35-n. The bolts 35, which are provided to secure the drive units 3 having the pinions 34, may be strained in response to the loads applied to the teeth of the pinions 34 with the ring gear 106 meshing with the pinions 34. The strain sensor 20-n senses the amount of strain in the corresponding bolt 35-n. With the strain sensors 20, the loads applied on the teeth of pinions 34 with the ring gear 106 meshing with the pinions 34 can be detected based on the strain of the respective bolts 35. Based on the detected results, the applied loads on the teeth 106a of the ring gear 106 can be detected, which may correspond to the loads on the teeth of the pinions 34.

Although not shown, the load detecting part 41 may have sensors that can detect the applied loads on the teeth 106a of the ring gear 106, other than the strain sensors 20. The load detecting part 41 may have a plurality of types of sensors and detect the applied loads on the teeth 106a of the ring gear 106, based on the information obtained by the plurality of types of sensors.

In the present embodiment, the moving part 11 has more than one drive unit 3. The plurality of drive units 3 each have the pinion 34 meshing with the ring gear 106. In this case, the load detecting part 41 may detect the applied loads on the teeth 106a of the ring gear 106 that are generated by application of an external force or the driving forces of the drive units 3 via the pinions 34. More specifically, if the moving part 11 has four drive units 3, i.e., drive units 3-1 to 3-4, the load detecting part 41 detects: the applied load on the teeth 106a of the ring gear 106 that is generated by application of an external force or the driving force of the drive unit 3-1 via the pinion 34 of the drive unit 3-1; the applied load on the teeth 106a of the ring gear 106 that is generated by application of an external force or the driving force of the drive unit 3-2 via the pinion 34 of the drive unit 3-2; the applied load on the teeth 106a of the ring gear 106 that is generated by application of an external force or the driving force of the drive unit 3-3 via the pinion 34 of the drive unit 3-3; and the applied load on the teeth 106a of the ring gear 106 that is generated by application of an external force or the driving force of the drive unit 3-4 via the pinion 34 of the drive unit 3-4. For example, the load detecting part 41 simultaneously detects the applied loads on the teeth 106a of the ring gear 106 that are respectively generated by application of an external force or the driving forces of the drive units 3 via the respective pinions 34. More specifically, when the moving part 11 has four drive units 3, i.e., drive units 3-1 to 3-4, the load detecting part 41 simultaneously detects: the applied load on the teeth 106a of the ring gear 106 that is generated by application of an external force or the driving force of the drive unit 3-1 via the pinion 34 of drive unit 3-1; the applied load on the teeth 106a of the ring gear 106 that is generated by application of an external force or the driving force of the drive unit 3-2 via the pinion 34 of drive unit 3-2; the applied load on the teeth 106a of the ring gear 106 that is generated by application of an external force or the driving force of the drive unit 3-3 via the pinion 34 of drive unit 3-3; and the applied load on the teeth 106a of the ring gear 106 that is generated by application of an external force or the driving force of the drive unit 3-4 via the pinion 34 of drive unit 3-4.

In the present embodiment, the load detecting part 41 includes an input terminal of the PLC. In the present embodiment, the input terminal is connected to the strain sensors 20 of the load detecting part 41.

The position identifying part 42 uses the azimuth sensor 47 to identify the target teeth 106b that are subject to the applied loads, from among the teeth 106a of the ring gear 106. As described above, the load detecting part 41 relating to the present embodiment has the strain sensors 20. With the strain sensors 20, the loads applied to the teeth of the pinions 34 with the ring gear 106 meshing with the pinions 34 can be detected. The strain sensors 20, however, cannot necessarily identify which ones of the teeth 106a of the ring gear 106 are the target teeth 106b that are subject to the applied loads. In the example shown in Fig. 2, the ring gear 106 has M teeth 106a, i.e., 106a-1 to 106a-M. The strain sensors 20 cannot necessarily identify which ones of the teeth 106a-1 to 106a-M are the target teeth 106b. In this regard, the position identifying part 42 can identify the target teeth 106b from among the teeth 106a-1 to 106a-M.

The position identifying part 42 can identify the target teeth 106b that are loaded at a time when the load detecting part 41 detects the applied loads on the teeth 106a of the ring gear 106.

According to the present embodiment, the position identifying part 42 identifies the target teeth 106b based on the sensor information obtained from the sensor 47 that is configured to detect the rotational position of the driven part 103a with respect to the ring gear 106, i.e., the azimuth sensor 47 described above, and the position information indicating the positions of the pinions 34 with respect to the driven part 103a. The position information indicating the positions of the pinions 34 relative to the driven part 103a is, for example, related to the relative positional relationship between the driven part 103a and the rotation axes of the pinions 34. When the driven part 103a rotates with respect to the ring gear 106, the positions of the rotation axes of the pinions 34 also rotate with respect to the ring gear 106 along with the driven part 103a. The rotation of the driven part 103a relative to the ring gear 106 does not change the relative positions of the driven part 103a and the rotation axes of the pinions 34. The positions of the pinions 34 relative to the ring gear 106 can be identified by determining the positions of the pinions 34 relative to the driven part 103a based on the position information and determining the position of the driven part 103a relative to the ring gear 106 based on the sensor information obtained from the azimuth sensor 47. In this way, the target teeth 106b that are subject to the applied loads can be identified from among the teeth 106a of the ring gear 106.

In the present embodiment, the position identifying part 42 can identify the target teeth 106b from among the teeth 106a-1 to 106a-M. In the example shown in Fig. 2, the pinion 34 of the drive unit 3-1 is in contact with the tooth 106a-1. The tooth 106a-1 is the target tooth 106b that is subject to the applied load through application of an external force or the driving force of the drive unit 3-1 via the pinion 34 of the drive unit 3-1 to the ring gear 106.

In the present embodiment, the moving part 11 has more than one drive unit 3. The drive units 3 each have the pinion 34 meshing with the ring gear 106. In this case, the position identifying part 42 identifies the target teeth 106b that are subject to the applied loads through application of an external force or the driving forces of the drive units 3 via the respective pinions 34. In this case, the number of the target teeth 106b to be identified corresponds to the number of the pinions 34. More specifically, the moving part 11 includes four drive units 3, i.e., the drive units 3-1 to 3-4 in the present embodiment. In this case, the position identifying part 42 identifies: the target tooth 106b that is subject to the applied load through application of an external force or the driving force of the drive unit 3-1 via the pinion 34 of drive unit 3-1; the target tooth 106b that is subject to the applied load through application of an external force or the driving force of the drive unit 3-2 via the pinion 34 of drive unit 3-2; the target tooth 10b that is subject to the applied load through application of an external force or the driving force of the drive unit 3-3 via the pinion 34 of drive unit 3-3; and the target tooth 106b that is subject to the applied load through application of an external force or the driving force of the drive unit 3-4 via the pinion 34 of drive unit 3-4.

Including the load detecting part 41 and the position identifying part 42, the load measuring system 1 relating to the present embodiment can determine which of the teeth 106a of the ring gear 106 are subject to the applied loads and to what extent the applied loads are exerted.

The following now describes the load measuring method relating to the embodiment of the present invention. The load measuring method can be performed using the load measuring system 1 relating to the present embodiment described above. The load measuring method includes a load detecting step and a position identifying step.

In the load detecting step, the applied loads on the teeth of the ring gear 106 are detected in the moving part 11 of the wind turbine 10. The load detecting step can be performed using the load detecting part 41 described above.

In the present embodiment, the moving part 11 has more than one drive unit 3. The drive units 3 each have the pinion 34 meshing with the ring gear 106. In this case, in the load detecting step, the applied loads on the teeth 106a of the ring gear 106 that are generated by application of an external force or the driving forces of the drive units 3 via the respective pinions 34 are detected. For example, in the load detecting step, the applied loads on the teeth 106a of the ring gear 106 that are respectively generated by application of an external force or the driving forces of the drive units 3 via the respective pinions 34 are simultaneously detected.

In the position identifying step, the target teeth 106b that are subject to the applied loads can be identified from among the teeth 106a of the ring gear 106. The position identifying step can be performed using the position identifying part 42 described above. The position identifying step identifies the target teeth 106b that are subject to the applied loads at a time when the applied loads on the teeth 106a of the ring gear 106 are detected in the load detecting step.

In the present embodiment, the moving part 11 has more than one drive unit 3. The drive units 3 each have the pinion 34 meshing with the ring gear 106. In this case, the position identifying step identifies the target teeth 106b that are subject to the applied loads through application of an external force or the driving forces of the drive units 3 via the respective pinions 34.

Including the load detecting step and the position identifying step, the load measuring method relating to the present embodiment can determine which of the teeth 106a of the ring gear 106 are subject to the applied loads and to what extent the applied loads are exerted.

Determining which of the teeth 106a of the ring gear 106 are subject to the applied loads and to what extent the applied loads are exerted may be conducted multiple times within a given period. Such determination may be conducted periodically. If such determination is conducted multiple times within a given period, it is desirable that the intervals between the determinations are sufficiently shorter than the operation period and the suspended period illustrated with reference to Fig. 4, considering that the determinations should correspond to various states of the moving part 11. Note that the applied loads fluctuate in cycles shorter than the durations of the operation and suspended periods. For example, while the rotor 104 and the blades 105 of the wind turbine 10 are rotating, the applied loads can vary periodically depending on the rotation periods of the rotor 104 and the blades 105 and the number of the blades 105. The applied loads can vary with a frequency of about 1 Hz, for example. The intervals between the determinations are preferably set depending on the period or amplitude of the fluctuation of the applied loads, which fluctuate in such short cycles as described above. The intervals between the determinations are preferably set depending on the period or amplitude of the fluctuation of the applied loads, thereby enhancing accuracy of estimating a damage probability, which will be described below.

The load measuring method relating to the present embodiment may include a display step. The display step can be performed using the display part 45 shown in Fig. 5. The display part 45 will be described in detail below. In the display step, the information obtained by the load detecting part 41 may be displayed on the display part 45. The display part 45 may show the information of the target teeth 106b identified by the position identifying part 42. The display part 45 may show which of the teeth 106a of the ring gear 106 are identified as the target teeth 106b. The display part 45 may show which of the teeth 106a-1 to 106a-M are identified as the target teeth 106b. The display part 45 may show which of the teeth 106a of the ring gear 106 are the target teeth 106b that are subject to the applied loads, and also show the magnitudes of the applied loads on the target teeth 106b. The display part 45 may show the sensor information obtained from the azimuth sensor 47 described above, and the position information indicating the positions of the pinions 34 relative to the driven part 103a.

As described above, the load measuring system 1 and the load measuring method relating to the present embodiment can determine which of the teeth 106a of the ring gear 106 are subject to the applied loads and to what extent the applied loads are exerted. Specifically, if the moving part 11 has a plurality of drive units 3, the respective pinions 34 of the drive units 3 mesh with the ring gear 106. In this case, the present embodiment makes it possible to determine which of the teeth 106a are subject to the applied loads that are caused with the respective pinions 34 of the drive units 3 meshing with the ring gear 106, and to what extent the applied loads are exerted. Specifically, when the moving part 11 is designed to cause the nacelle 103 of the wind turbine 10 to rotate relative to the tower 102, the present embodiment makes it possible to determine which of the teeth 106a of the ring gear 106 are subject to the applied loads, and to what extent the applied loads are exerted.

More specifically, the load measuring system 1 and the load measuring method relating to the present embodiment can determine, in real time while the wind turbine 10 is in operation, which of the teeth 106a of the ring gear 106 are subject to the applied loads and to what extent the applied loads are exerted and make use of the obtained information for the purposes of controlling the wind turbine 10 or maintaining the ring gear 106. For example, the following considers a situation where the information regarding which of the teeth 106a are subject to the applied loads and to what extent the applied loads are exerted can suggest that some of the teeth 106a are subject to enormous applied loads due to the wind hitting the wind turbine 10. In this situation, a brake (for example, the brake that has the friction member 50 shown in Fig. 2 and that is configured to press the friction member 50 against the ring gear 106 to apply a braking force to slow down the rotation of the driven part 103a relative to the ring gear 106) may be in operation and applying a braking force to slow down the rotation of the driven part 103a relative to the ring gear 106. If this is the case, the brake may be released. Releasing the brake allows the driven part 103a to rotate relative to the ring gear 106. This can result in relieving the applied loads on some of the teeth 106a. In the above-described situation, the orientation of the blades 105 may be controlled so that the direction in which the blades 105 extend becomes parallel to the surface on which the wind turbine 10 is installed. This makes the blades 105 less susceptible to wind. The wind force can be thus prevented from being transmitted through the blades 105 to the teeth 106a of the ring gear 106. As a result, it is possible to suppress large applied loads being exerted on the teeth 106a.

According to the load measuring system 1 and the load measuring method relating to the present embodiment, the process of determining which of the teeth 106a of the ring gear 106 are subject to the applied loads and to what extent the applied loads are exerted can be easily conducted a plurality of times within a given period. Such determination can be easily conducted periodically. Specifically, such determination can be repeatedly conducted at intervals sufficiently shorter than the durations of the operation period and the suspended period described above. In this way, the present embodiment facilitates obtaining the results corresponding to various states of the moving part 11. Therefore, the results corresponding to various states of the moving part 11 can be used for the purposes of controlling the wind turbine 10 and maintaining the ring gear 106. Furthermore, since the determination is conducted a plurality of times within a given period, a damage probability monitoring method and a lifespan predicting method, which will be described below, can be realized. As described above, the applied loads can fluctuate with short cycles and vary with a frequency of about 1 Hz, for example. Therefore, from the standpoint of accurately estimating the damage probability based on the measured applied loads, it is desirable to conduct such determinations at the shortest possible interval and as frequently as possible. In this regard, the load measuring method using the load measuring system 1 relating to the present embodiment is preferable due to its ability to conduct a large number of determinations at short intervals.

The load measuring system 1 and the load measuring method relating to the present embodiment can determine which of the teeth 106a of the ring gear 106 are subject to the applied loads and to what extent the applied loads are exerted, and the obtained results may be used to detect abnormalities of the ring gear 106. For example, the results of the determinations may be used to detect abnormalities, for example, whether the teeth 106a of the ring gear 106 are significantly worn out, whether some of the teeth 106a are missing, or whether the ring gear 106 is distorted. The results of the determinations may be used to detect abnormalities of the drive units 3, for example, abnormalities of the pinions 34 of the drive units 3. In this case, the results of a single determination conducted for a single tooth 106a (e.g., the tooth 106a-1) may be used to detect abnormalities of the ring gear 106 or the drive units 3. The results of determinations conducted for a plurality of teeth 106a (e.g., two teeth, 106a-1 and 106a-2) may be used to detect abnormalities of the ring gear 106 or the drive units 3. The results of determinations conducted multiple times at different times for a single tooth 106a (e.g., the tooth 106a-1) may be used to detect abnormalities of the ring gear 106 or the drive units 3.

The following now describes the damage probability estimating system 200 relating to the embodiment of the present invention. The damage probability estimating system 200 relating to the present embodiment includes the load measuring system 1 relating to the present embodiment described above, and a damage probability estimating part 44. The damage probability estimating part 44 may calculate damage probabilities of the teeth 106a of the ring gear 106 based on the applied loads on the teeth 106a of the ring gear 106 measured within a certain period by the load measuring system 1. In the example shown in Fig. 5, the damage probability estimating part 44 is included in a calculating part 40, which will be described below.

For example, the damage probability estimating system 200 is provided on the wind turbine 10 and includes an IoT device including the load detecting part 41 and the position identifying part 42. The IoT device is installed in the nacelle 103 of the wind turbine 10. Including the IoT device, the damage probability estimating system 200 includes the load measuring system 1. The IoT device included in the damage probability estimating system 200 may include the load detecting part 41 and the position identifying part 42. In other words, the damage probability estimating system 200 includes: the load measuring system 1 having the load detecting part 41 and position identifying part 42; and the calculating part 40 including the damage probability estimating part 44.

The calculating part 40 may be included in the control part of the IoT device in the wind turbine 10. In other words, the control part may function as the calculating part 40. The control part may function as the calculating part 40 including the load detecting part 41, the position identifying part 42 and the damage probability estimating part 44.

The damage probability estimating system 200 may include, in addition to the IoT device installed in the wind turbine 10, a computer connected to the IoT device via a communication line. In this case, the computer may be, for example, a server, a workstation, a personal computer, a tablet device, or a smartphone device. The computer may be installed, for example, in a company building where the administrator of the wind turbine 10 stays. In this case, the IoT device may include the load detecting part 41 and the position identifying part 42, and the computer connected to the IoT device may include the calculating part 40. In other words, the computer connected to the IoT device may function as the calculating part 40.

The damage probability estimating system 200 may include, in addition to the IoT device installed in the wind turbine 10, a plurality of computers arranged in a distributed manner, connected to each other via a communication line, and connected to the IoT device via a communication line. The computers may implement cloud computing by communicating with each other via a communication line. In this case, the computers connected to the IoT device function as the calculating part 40. In other words, the computers connected to the IoT device may function as the calculating part 40 through cloud computing.

Although not shown, the computers included in the IoT device and/or the computers connected to the IoT device may include a storage part. For example, the storage part stores thereon programs for causing the computers to execute the load measuring method, and the damage probability estimating method, damage probability monitoring method and lifespan predicting method described below. A part or all of the load detecting part 41 and the position identifying part 42 are implemented by a processor such as a central processing unit (CPU) executing the program(s) stored on the storage part. A part or all of the damage probability estimating part 44 and a lifespan predicting part 46, which is described below, may be implemented by a processor such as a central processing unit (CPU) executing the program(s) stored on the storage part. For example, the storage part is a computer readable recording medium. The storage part is preferably formed of a non-volatile storage medium (non-transitory storage medium) such as a flash memory or a hard disk drive (HDD). The storage part may include a volatile storage medium such as a RAM (random access memory). A part or all of the load detecting part 41, position identifying part 42, damage probability estimating part 44 and lifespan predicting part 46 may be implemented by using hardware such as a large scale integration (LSI) or an application specific integrated circuit (ASIC).

The following now describes what is meant by the term "damage probability." While the wind turbine 10 is in operation, the teeth 106a of the ring gear 106 are considered to be subject to the applied loads, which are repetitive loads. Due to the repetitive loads, the teeth 106a gradually become susceptible to fatigue failure. Unless the teeth 106a are replaced with new pieces, or the applied loads on the teeth 106a are reduced, the teeth 106a will eventually experience fatigue failure. The damage probability is a numerical value that indicates how soon the teeth 106a are likely to experience fatigue failure. The specific examples of the damage probability will be described below.

According to the damage probability estimating system 200 relating to the present embodiment, the load measuring system 1 conducts the process of determining which of the teeth 106a of the ring gear 106 are subject to the applied loads and to what extent the applied loads are exerted a plurality of times within a given period. More specifically, the load measuring system 1 conducts such determinations periodically.

If the determinations are conducted periodically within a given period, different teeth 106a are identified as the target teeth 106b that are subject to the applied loads, at different determination times, with the magnitudes of the applied loads varying across the different determination times. For example, a case is assumed where determinations are conducted periodically within a given period starting at a time S. At the starting time S, the pinion 34 of the drive unit 3-1 butts up against the tooth 106a-1, and the applied load is exerted on the tooth 106a-1. In this case, a determination conducted at a time C, which is subsequent to the starting time S, may indicate that the applied load on the tooth 106a-1 is reduced while the pinion 34 of the drive unit 3-1 is still in contact with the tooth 106a-1. At a time D, which is subsequent to the starting time S, the pinion 34 of the drive unit 3-1 may not be in contact with the tooth 106a-1, but the pinion 34 of the drive unit 3-2 may be in contact with the tooth 106a-1. Therefore, the determination at the time D may reveal that the tooth 106a-1 is subject to the applied load. At a time E, which is subsequent to the starting time S, none of the pinions 34 of the drive units 3-1 to 3-4 are in contact with the tooth 106a-1, and the determination at the time E may thus indicate that the tooth 106a-1 is subject to no applied load. Periodic determinations conducted within a given period enable the accumulation of applied load data for one of the teeth 106a (e.g., tooth 106a-1). Similarly, the above-described periodic determinations conducted within a given period also enable the accumulation of applied load data for the respective teeth 106a. For example, data on periodically determined applied load can be accumulated for the respective teeth 106a-1 to 106aM.

The damage probability estimating part 44 relating to the present embodiment calculates the damage probability of one tooth 106a (e.g., the tooth 106a-1) based on the accumulated data of the applied load determined periodically for the tooth 106a.

The damage probability estimating part 44 relating to the present embodiment calculates an average load based on the applied loads on the teeth 106a of the ring gear 106 measured within a given period by the load measuring system 1 and calculates the damage probability of the teeth 106a of the ring gear 106 based on the average load.

The following now describes what is meant by the term "average load." As noted above, the applied loads on the teeth 106a of the ring gear 106 can vary periodically, depending on the time when the applied loads are measured. The following now examines a loading condition X where an applied load on an object can vary periodically. Furthermore, consideration is given to the value of a constant load that, despite being constant, produces the same fatigue life as that under the above-mentioned loading condition X when it is repeatedly applied to the object with the same cycle as the fluctuation cycle of the applied load. The value of the constant load is referred to as the average load for the loading condition X. The average load calculated based on the applied load on the teeth 106a of the ring gear 106 is the value of a constant load that produces the same fatigue life of the teeth 106a as that produced under the loading condition to which the teeth 106a are subject.

By referring to the average load described above, the damage probability of the teeth 106a of the ring gear 106 can be calculated.

The damage probability estimating part 44 relating to the present embodiment calculates the average load for one of the teeth 106a based on the accumulated data of the applied load measured periodically for the tooth 106a. For example, the average load can be calculated according to DIN 3990-6 1994-12 Method III specified in the German Industrial Standard.

When it comes to a case where a repetitive load is applied to an object, such as the applied loads on the teeth 106a of the ring gear 106, it is known that the repetitive load applied to the object has almost no effect on the fatigue life of the object if the repetitive load is below a certain value. In other words, it is well established that when a repetitive load on an object remains below a specific threshold, the object may not undergo fatigue failure, irrespective of the number of load applications. In consideration of the above, when an average load is calculated for one of the teeth 106a based on the accumulated data of the applied load measured periodically, the applied load on the tooth 106a at a given time may be considered as zero if the applied load measured at the given time is below a specific value. This can simplify the calculation of the average load. Furthermore, by excluding small applied loads that exert minimal influence on the fatigue life of the object, a more accurate damage probability can be calculated.

In the present embodiment, the damage probability R for one of the teeth 106a of the ring gear 106 can be calculated as follows. The number of allowable repetitions $N_P$ is calculated based on the average load $T_{eq}$ corresponding to the loading condition on the tooth 106a between an initial-state time H and a calculation time G. The number of allowable repetitions $N_P$ is the maximum number of repetitions of the average load $T_{eq}$ on the tooth 106a, for which the damage probability R is to be calculated, without causing fatigue failure of the tooth 106a. Furthermore, the number of actual repetitions $N_A$ of the applied load at the calculation time G is determined. The number of actual repetitions $N_A$ is the number of times the applied load varies periodically between the initial state time H - when the tooth 106a for which the damage probability R is to be calculated is not yet subject to repetitive loads, i.e., in an initial state-, and the calculation time G -when the damage probability R is calculated-. The damage probability R is obtained by dividing the number of actual repetitions $N_A$ by the number of allowable repetitions $N_P$.

For example, the applied load fluctuates in cycles of one second. In this case, the load measuring step and the damage probability estimating step may be performed in cycles of one second.

The initial-state time H can be the starting time S of the certain period during which the determination of which of the teeth 106a of the ring gear 106 are subject to the applied loads and to what extent the applied loads are exerted is conducted. In other words, at the starting time S of the certain period, the tooth 106a of the ring gear 106 may be in the initial state. At the starting time S of the certain period, all of the teeth 106a of the ring gear 106 may be in the initial state. The starting time S of the certain period may be the time when the wind turbine 10 starts operating. In this case, at the starting time S, all of the teeth 106a of the ring gear 106 are considered to be in the initial state.

The damage probability estimating part 44 relating to the present embodiment may calculate the damage probability of each of the teeth 106a (for example, the teeth 106a-1 to 106a-M) based on the accumulated data of the applied load measured periodically for each tooth 106a.

As shown in Fig. 5, the damage probability estimating system 200 may further include the display part 45. The display part 45 is, for example, a display device such as a liquid crystal display or an organic electroluminescence display. The display part 45 may include an operation device such as a touch panel. If the damage probability estimating system 200 includes a computer connected to the IoT device installed in the wind turbine 10, the display part 45 may be the screen of the computer.

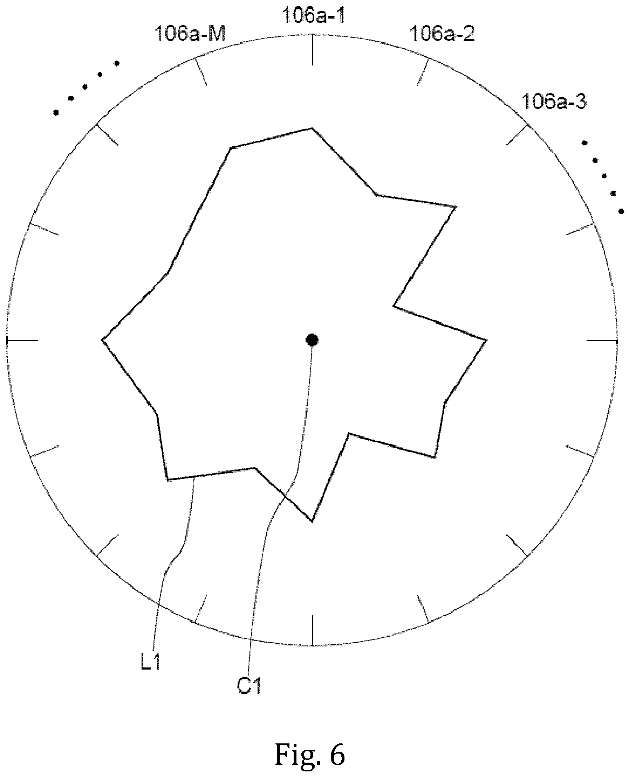

In the damage probability estimating system 200 relating to the present embodiment, the display part 45 may show information about the damage probability calculated by the damage probability estimating part 44. The display part 45 may show a value representative of the damage probability of one of the teeth 106a of the ring gear 106. The display part 45 may show a value representative of the average load for one of the teeth 106a of the ring gear 106. If the damage probability estimating part 44 calculates the damage probability for each of the teeth 106a of the ring gear 106, the display part 45 may show values representative of the damage probabilities of the respective teeth 106a. The display part 45 may show a value representative of the average load for each of the teeth 106a. The display part 45 may show a circular graph shown in Fig. 6 in order to indicate values representative of the damage probabilities for the respective teeth 106a (the teeth 106a-1 to 106a-M). Referring to the circular graph shown in Fig. 6, as the distance between the line L1 position and the center C1 of the circular graph increases, the damage probability of the corresponding tooth 106a increases.

The display part 45 may show the information obtained by the load detecting part 41. The display part 45 may show the information of the target teeth 106b identified by the position identifying part 42. The display part 45 may show which of the teeth 106a of the ring gear 106 are identified as the target teeth 106b. The display part 45 may show which of the teeth 106a-1 to 106a-M are identified as the target teeth 106b. The display part 45 may show which of the teeth 106a of the ring gear 106 are the target teeth 106b that are subject to the applied loads, and also show the magnitudes of the applied loads on the target teeth 106b. The display part 45 may show the sensor information obtained from the azimuth sensor 47 described above and the position information indicating the positions of the pinions 34 relative to the driven part 103a.

The following now describes the damage probability monitoring method relating to the embodiment of the present invention. The damage probability monitoring method relating to the present embodiment can be performed using the damage probability estimating system 200 relating to the present embodiment described above. The damage probability monitoring method includes a load measuring step, a damage probability estimating step, and an alerting step. The damage probability monitoring method may further include a damage probability displaying step.

In the load measuring step, the above-described load measuring method is performed to measure the applied loads on the teeth 106a of the ring gear 106 within a given period. According to the load measuring step of the present embodiment, determination of which of the teeth 106a are subject to the applied loads and to what extent the applied loads are exerted is conducted a plurality of times within the given period. More specifically, such determination is conducted periodically in the load measuring step.

In the damage probability estimating step, the damage probabilities of the teeth 106a of the ring gear 106 are calculated based on the applied loads on the teeth 106a of the ring gear 106 measured within the given period in the load measuring step. The damage probability estimating step can be performed using the damage probability estimating part 44 described above. In the damage probability estimating step, the damage probability of one tooth 106a (e.g., the tooth 106a-1) may be calculated based on the accumulated data of the applied load measured for the tooth 106a in the load measuring step. In the damage probability estimating step, the damage probability of each of the teeth 106a (for example, the teeth 106a-1 to 106a-M) may be calculated based on the accumulated data of the applied load measured for each tooth 106a in the load measuring step.

In the damage probability display step, information about the damage probabilities calculated in the damage probability estimating step is shown on the display part 45. In the damage probability display step, the display part 45 may show values representative of the damage probabilities of the teeth 106a of the ring gear 106 and values representative of the average loads. In the damage probability display step, the display part 45 may show a graph similar to that shown in Fig. 6 in order to indicate the values representative of the damage probabilities for the respective teeth 106a (the teeth 106a-1 to 106a-M).

The alerting step is performed if the damage probabilities calculated in the damage probability estimating step are equal to or greater than a threshold value. In the alerting step, an alert is issued. The alert issued in the alerting step is designed to indicate that the calculated damage probabilities are equal to or greater than the threshold value. For example, the alerting step can be performed using the computer serving as the above-described damage probability estimating system 200, which is connected to the IoT device installed in the wind turbine 10. The alerting step may be performed using the display part 45. In this case, the alert can be issued in the alerting step by showing on the display part 45 an alert stating that the calculated damage probabilities are equal to or greater than the threshold value. Although not shown, the computer connected to the IoT device installed in the wind turbine 10 may further have a speaker for outputting sound. In this case, the alert can be issued in the alerting step by causing the speaker to output sound or voice communicating that the calculated damage probabilities are equal to or greater than the threshold value.

The damage probability estimating system 200 and the damage probability monitoring method relating to the present embodiment can be used to calculate the damage probabilities of the teeth 106a of ring gear 106. Specifically, the damage probability of each of the teeth 106a of the ring gear 106 can be calculated. The damage probability estimating system 200 and the damage probability monitoring method relating to the present embodiment can be used to determine in real time while the wind turbine 10 is in operation the damage probabilities of the teeth 106a, and the obtained information can be used for the purposes of controlling the wind turbine 10 or maintaining the ring gear 106.

The damage probability monitoring method performed using the damage probability estimating system 200 relating to the present embodiment facilitates repeating calculation of the damage probabilities. In addition, such calculation can be easily conducted periodically.

In the ring gear 106 of the moving part 11 of the wind turbine 10, only specific teeth 106a may have a relatively high damage probability depending on the installation environment of the wind turbine 10. For example, if the wind turbine 10 is installed in an environment subject to wind predominantly from a specific direction, only specific teeth 106a may exhibit a relatively high damage probability. In such cases, the present embodiment makes it possible to determine the damage probabilities of the respective teeth 106a and to use the information for the purposes of controlling the wind turbine 10 or maintaining the ring gear 106. For example, if only certain teeth 106a have a relatively high damage probability, it is only those teeth 106a with a relatively high damage probability that have their tooth surface condition inspected, and if necessary, only those teeth 106a with a relatively high damage probability can be repaired by welding or other means. If the ring gear 106 is of a split type, the ring gear 106 may be separated, and only the segment containing the teeth 106a with a high damage probability may be replaced.

As a comparative example, consideration is given to the following method for inspecting and maintaining the condition of the teeth 106a of the ring gear 106. Unlike the present embodiment, the method of the comparative example does not include determination of the applied loads. When a failure of the moving part 11 is detected, the tooth surface condition of all of the teeth 106a of the ring gear 106 is inspected to identify any damaged teeth 106a. According to the method of the comparative example, the tooth surfaces of all of the teeth 106a of the ring gear 106 must be inspected before any damaged teeth 106a can be identified. This requires a long time to identify the damaged teeth 106a. In addition, according to the method of the comparative example, the tooth surface condition of the teeth 106a is not inspected unless the damage to the teeth 106a has progressed to the extent that a failure of the moving part 11 is detected. This prevents early recognition of the increased damage probability of the teeth 106a. Therefore, by the time the damage to the teeth 106a is detected, repairing specific teeth 106a alone may no longer be sufficient to repair the ring gear 106. Therefore, the ring gear 106 may need to be entirely replaced in order to repair the moving part 11. In this case, repairing the moving part 11 requires considerable cost.

The damage probability estimating system 200 and the damage probability monitoring method relating to the present embodiment, on the other hand, enable maintenance of the ring gear 106 to be conducted simply by inspecting the tooth surface condition of only the teeth 106a with a relatively high damage probability. In addition, early detection of an increase in the damage probabilities of the teeth 106a is possible. Therefore, the teeth 106a with an increased damage probability can be identified before the ring gear 106 needs to be entirely replaced, and the maintenance of the ring gear 106 can be completed simply by repairing those teeth 106a with an increased damage probability. In this way, the present embodiment can reduce the time required for maintenance work, thereby cutting the cost.

Furthermore, the damage probability monitoring method relating to the present embodiment includes the alerting step, which can alert the operator of the wind turbine 10 that the damage probabilities of the teeth 106a of the ring gear 106 are equal to or greater than the threshold value. As a result, the operator can take measures to take care of the damages to the teeth 106a at an early stage, such as controlling the wind turbine 10 or maintaining the ring gear 106.

The following now describes the lifespan predicting system 201 relating to the embodiment of the present invention. The lifespan predicting system 201 relating to the present embodiment includes the damage probability estimating system 200 relating to the present embodiment described above, and a lifespan predicting part 46. In the example shown in Fig. 5, the lifespan predicting part 46 is included in the calculating part 40. The lifespan predicting part 46 predicts the lifespans of the teeth 106a of the ring gear 106 based on the damage probabilities of the teeth 106a of the ring gear 106 calculated by the damage probability estimating system 200.

The lifespan predicting part 46 relating to the present embodiment calculates the lifespans L of the teeth 106a of the ring gear 106 by the following expression (1) based on the elapsed time T from the initial-state time H to the calculation time G at which the damage probabilities R are calculated, and the damage probabilities R.

$$L = T \times (1-R)/R \text{ ... Expression (1)}$$

The lifespan predicting part 46 relating to the present embodiment may refer to the damage probability of one tooth of the teeth 106a of the ring gear 106 to predict the lifespan of the one tooth 106a. The lifespan predicting part 46 may refer to the damage probabilities of the respective teeth 106a of the ring gear 106 to predict the lifespans of the respective teeth 106a.

In the lifespan predicting system 201 relating to the present embodiment, the display part 45 may show information about the lifespans of the teeth 106a predicted by the lifespan predicting part 46. The display part 45 may show a value representative of the lifespan of one of the teeth 106a of the ring gear 106. The display part 45 may show values representative of the lifespans of the teeth 106a of the ring gear 106.

The following now describes the lifespan predicting method relating to the embodiment of the present invention. The lifespan predicting method relating to the present embodiment can be performed using the lifespan predicting system 201 relating to the present embodiment described above. The lifespan predicting method relating to the present embodiment includes a load measuring step, a damage probability estimating step, and a lifespan predicting step. The lifespan predicting method may further include a lifespan displaying step.

The load measuring step and the damage probability estimating step can be similar to those described above in relation with the damage probability monitoring method.

In the lifespan predicting step, the lifespans of the teeth 106a of the ring gear 106 are predicted based on the damage probabilities of the teeth 106a of the ring gear 106 calculated in the damage probability estimating step.

In the lifespan displaying step, information about the lifespans of the teeth 106a predicted in the lifespan predicting step is shown on the display part 45.

The lifespan predicting system 201 and the lifespan predicting method relating to the present embodiment can be used to predict the lifespans of the teeth 106a of ring gear 106. Specifically, the lifespan of each of the teeth 106a of the ring gear 106 can be predicted. The lifespan predicting system 201 and the lifespan predicting method relating to the present embodiment can be used to determine the lifespans of the teeth 106a while the wind turbine 10 is in operation, and the obtained information can be used for the purposes of controlling the wind turbine 10 or maintaining the ring gear 106. Specifically, the predicted lifespans of the teeth 106a can be used for long-term maintenance planning.

While the foregoing has described the embodiment with reference to specific examples, these specific examples are not intended to limit the embodiment. The foregoing embodiment can be implemented in various other specific forms and is susceptible to omission, replacement, and modification of various elements thereof within the purport of the invention.

With reference to the appended drawings, the following describes modification examples. In the following description and the drawings used therein, parts that can be configured in a similar manner to those in the foregoing specific examples are denoted by the same reference signs as those in the foregoing specific examples and are not described again.

(First Modification Example)

According to the foregoing embodiment, the position identifying part 42 identifies the target teeth 106b based on the sensor information and the position information indicating the positions of the pinions 34 with respect to the driven part 103a. The position identifying part 42, however, can use any other methods to identify the target teeth 106b that are subject to the applied loads, from among the teeth 106a of the ring gear 106.

According to a first modification example, the position identifying part 42 may refer to position information indicating the positions of the pinions 34 relative to the ring gear 106 at a first time t1 and rotation amount information indicating the rotation amounts of the pinions 34 between the first time t1 and a second time t2, in order to identify the target teeth 106b at the second time t2.

For example, the position information indicating the positions of the pinions 34 relative to the ring gear 106 at the first time t1 is stored in advance in a location that is accessible by the position identifying part 42, for example, in the storage part described above.

For example, the load measuring system 1 of the first modification example further includes a rotation amount sensor, which is not shown, for obtaining rotation amount information indicating the rotation amounts of the shafts 33. For example, the rotation amount sensor is an encoder. In this case, the position identifying part 42 uses, as the rotation amount information, the rotation amount information of the shafts 33 obtained by the rotation amount sensor. The pinions 34 are fixed to the ends of the shafts 33 and can thus rotate as the shafts 33 rotate. Therefore, the rotation amount information indicating the rotation amounts of the shafts 33 can be regarded as the rotation amount information indicating the rotation amounts of the pinions 34. The pinions 34, for which the rotation amount sensor obtains rotation amount information, rotate in two directions: a pinion-wise first side; and a pinion-wise second side. The following considers a case where, between a first time t1 and a second time t2, the pinions 34 rotate three times toward the pinion-wise first side and twice toward the pinion-wise second side. In this case, the position identifying part 42, referring to the rotation amount information obtained by the rotation amount sensor, determines that the change between the positions of the pinions 34 relative to the ring gear 106 at the first time t1 and those at the second time t2 corresponds to a single rotation of the pinions 34 toward the pinion-wise first side. In this manner, the position identifying part 42 of the first modification example can identify the positions of the pinions 34 relative to the ring gear 106 and identify the target teeth 106b at the second time t2, even if the second time t2 is any time other than the first time t1.

The load measuring system 1 including the position identifying part 42 of the first modification example can also determine which of the teeth 106a of the ring gear 106 are subject to the applied loads and to what extent the applied loads are exerted.

(Second Modification Example)

According to the above-described embodiment and modification example, the load detecting part 41 does not distinguish the first-side load and the second-side load. However, the load detecting part 41 may be configured in any other manners.

According to a second modification example, the load detecting part 41 distinguishes (i) the applied loads on the teeth 106a of the ring gear 106 that are generated by application of an external force or the driving forces of the drive units 3 via the pinions 34 with the teeth of the pinions 34 butting up against the teeth 106a of the ring gear 106 from the first side SR1 in the circumferential direction DR of the ring gear 106 and (ii) the applied loads on the teeth 106a of the ring gear 106 that are caused by application of an external force or the driving forces of the drive units 3 via the pinions 34 with the teeth of the pinions 34 butting up against the teeth 106a of the ring gear 106 from the second side SR2 in the circumferential direction DR of the ring gear 106. In other words, the load detecting part 41 relating to the second modification example distinguishes the first-side load and the second-side load. For example, if the load detecting part 41 is the strain sensor 20-n that can detect the amount of strain on the bolt 35-n described in the foregoing embodiment, it can separately detect the first-side load and the second-side load.

In the damage probability estimating system 200 with the load detecting part 41 of the second modification example, the damage probability estimating part 44 may calculate the damage probabilities of the teeth 106a of the ring gear 106 separately for the first-side and second-side loads. The damage probability estimating part 44 may calculate the average loads on the teeth 106a of the ring gear 106 separately for the first-side and second-side loads. In the lifespan predicting system 201 with the load detecting part 41 of second modification example, the lifespan predicting part 46 may predict the lifespans of the teeth 106a of the ring gear 106 based on the damage probabilities calculated separately for the first-side load and second-side loads.

The load detecting part 41 relating to the second modification example can distinguish the first-side load and the second-side load, and therefore calculate the damage probabilities and average loads separately, and predict the lifespans separately. Therefore, the difference between the first-side load and the second-side load can be taken into consideration, and the calculated damage probabilities and average loads can be more realistic, and the lifespan prediction can produce outcomes that are more representative of reality.

(Third Modification Example)

According to the foregoing embodiment and modifications, the load measuring system 1 is configured to measure the applied loads on the teeth 106a of the ring gear 106 of the moving part 11, which is configured to rotate the nacelle 103 of the wind turbine 10 relative to the tower 102. However, the moving part -including the ring gear 106 for which the applied loads are measured by the load measuring system 1- can be configured in any other manners.

The third modification example puts a focus on a moving part 111 of the wind turbine 10 shown in Fig. 1, which is configured to rotate the rotor 104 and blades 105 with respect to the nacelle 103. The rotor 104 and blades 105 can rotate in the roll direction relative to the nacelle 103. Although not shown, the moving part 111, like the moving part 11 described above, has a ring gear with a plurality of teeth, and drive units with pinions that mesh with the ring gear. In this case, the ring gear of the moving part 111 may be provided in the nacelle 103, and the drive units of the moving part 111 may be provided in the rotor 104. In other words, the rotor 104 may be the driven part for the moving part 111. The ring gear of the moving part 111 may be provided in the rotor 104, and the drive units of the moving part 111 may be provided in the nacelle 103. In other words, the nacelle 103 may be the driven part for the moving part 111. The description of the ring gear 106 and the drive units 3 of the moving part 11 can apply to the ring gear and the drive units of the moving part 111, as long as they are not contradictory.

For example, the moving part 111 may have a single drive unit.

The load measuring system 1 and the load measuring method described above can be used for the ring gear of the moving part 111, as well as for the ring gear 106 of the moving part 11, to determine which of the teeth of the ring gear are subject to the applied loads and to what extent the applies loads are applied. The damage probability estimating system 200 and the damage probability monitoring method described above can be used to calculate the damage probabilities of the teeth of ring gear. The lifespan predicting system 201 and the lifespan predicting method described above can be used to predict the lifespans of the teeth of the ring gear.

Aspects of the present invention are not limited to the foregoing embodiment and embrace various modifications conceivable by those skilled in the art. Advantageous effects of the invention are also not limited to those described above. In other words, various additions, modifications, and partial deletions are possible in a range not departing from the conceptual ideas and spirit of the present invention derived from contents defined in the claims and the equivalents thereof.

**Claims**

1. A load measuring system comprising:

   a load detecting part for use in a moving part of a wind turbine, the moving part including a ring gear with a plurality of teeth and at least one drive unit with a pinion meshing with the ring gear, the load detecting part being configured to detect an applied load that is exerted on a tooth of the ring gear due to application of an external force or a driving force of the drive unit via the pinion with the ring gear meshing with the pinion; and
   a position identifying part for identifying, from among the teeth of the ring gear, a target tooth subject to the applied load.

2. The load measuring system of claim 1,

   wherein driving of the moving part causes a driven part attached to the drive unit having the pinion to rotate relative to the ring gear, and wherein the position identifying part identifies, from among the teeth of the ring gear, the target tooth subject to the applied load, based on (i) sensor information obtained from a sensor configured to detect a rotational position of the driven part relative to the ring gear and (ii) position information indicating a position of the pinion relative to the driven part.

3. The load measuring system of claim 1, wherein the position identifying part refers to (i) position information indicating a position of the pinion relative to the ring gear at a first time and (ii) rotation amount information indicating an amount of rotation of the pinion between the first time and a second time to identify, from among the teeth of the ring gear, the target tooth subject to the applied load at the second time.

4. The load measuring system of claim 1, wherein the load detecting part distinguishes and detects separately (i) an applied load that is exerted on a tooth of the ring gear due to application of an external force or a driving force of the drive unit via the pinion with a tooth of the pinion butting up against the tooth of the ring gear from a first side in a circumferential direction of the ring gear and (ii) an applied load that is exerted on a tooth of the ring gear due to application of an external force or a driving force of the drive unit via the pinion with a tooth of the pinion butting up against the tooth of the ring gear from a second side that is opposite to the first side in the circumferential direction.

5. The load measuring system of claim 1,

   wherein the moving part causes a nacelle of the wind turbine to rotate relative to a tower, and wherein the moving part has a plurality of drive units.

6. A damage probability estimating system comprising:

   the load measuring system of claim 1; and
   a damage probability estimating part for calculating a damage probability of the tooth of the ring gear based on the applied load that is exerted on the tooth of the ring gear and that is measured by the load measuring system during a given period.

7. The damage probability estimating system of claim 6, wherein the damage probability estimating part calculates an average load based on the applied load that is exerted on the tooth of the ring gear and that is measured during the given period by the load measuring system and calculates the damage probability of the tooth of the ring gear based on the average load.

8. A lifespan predicting system comprising:

   the damage probability estimating system of claim 6; and
   a lifespan predicting part for predicting a lifespan of the tooth of the ring gear based on the damage probability of the tooth of the ring gear calculated by the damage probability estimating system.

9. A load measuring method comprising steps of:

   in a moving part of a wind turbine, the moving part including a ring gear with a plurality of teeth and a drive unit with a pinion meshing with the ring gear, detecting an applied load that is exerted on a tooth of the ring gear due to application of an external force or a driving force of the drive unit via the pinion with the ring gear meshing with the pinion; and

identifying, from among the teeth of the ring gear, a target tooth subject to the applied load.

10. A damage probability monitoring method comprising steps of:

measuring the applied load that is exerted on the tooth of the ring gear during a given period using the load measuring method of claim 9;

calculating a damage probability of the tooth of the ring gear based on the applied load that is exerted on the tooth of the ring gear and that is measured during the given period in the measuring; and

issuing an alert when the damage probability calculated in the calculating is equal to or greater than a threshold value.

11. A program for causing a computer to execute a load measuring method, the load measuring method comprising steps of:

in a moving part of a wind turbine, the moving part including a ring gear with a plurality of teeth and a drive unit with a pinion meshing with the ring gear, detecting an applied load that is exerted on a tooth of the ring gear due to application of an external force or a driving force of the drive unit via the pinion with the ring gear meshing with the pinion; and

identifying, from among the teeth of the ring gear, a target tooth subject to the applied load.

Fig. 1

Fig. 2

EP 4 715 200 A1

**36**

3

**1**

**41**

**103,103a**

31

Brake Part

30

Drive Part

Speed Reducer

32

Shaft

Strain Sensor 20

Pinion

Ring Gear

35-1

33

34

106

35-N

Fig. 3

Fig. 4

Fig. 5

EP 4 715 200 A1

Fig. 6

23

Europäisches
Patentamt

European
Patent Office

Office européen
des brevets

## EUROPEAN SEARCH REPORT

**Application Number**

EP 25 20 0832

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/072074 A1 (PECHER ARTHUR [DK] ET AL) 7 March 2019 (2019-03-07) | 1,2,5, 9-11 | INV. F03D15/00 |
| A | * paragraph [0036] - paragraph [0039] * * paragraph [0018] - paragraph [0024]; figures 3-4 * * paragraph [0040] * | 4 | F03D17/00 F03D80/50 |
| | ----- | | |
| X | EP 3 594 493 A1 (BONFIGLIOLI RIDUTTORI SPA [IT]) 15 January 2020 (2020-01-15) | 1-3,5-10 | |
| A | * paragraph [0034] - paragraph [0036]; claims 10-11; figures 3-4 * * paragraph [0024] * * paragraph [0028] - paragraph [0029] * * paragraph [0020] * | 4 | |
| | ----- | | |
| A | WO 2015/012124 A1 (NTN TOYO BEARING CO LTD [JP]; TAKEUCHI AKITOSHI [JP] ET AL.) 29 January 2015 (2015-01-29) * paragraph [0062] - paragraph [0065]; figure 8 * | 1 | |
| | ----- | | TECHNICAL FIELDS SEARCHED (IPC) |
| A | US 2013/035198 A1 (ENTING ANDREAS [DE] ET AL) 7 February 2013 (2013-02-07) * paragraph [0048] - paragraph [0052]; figures 6-7 * | 1 | F03D |
| | ----- | | |

The present search report has been drawn up for all claims

| Place of search | Date of completion of the search | Examiner |
|---|---|---|
| The Hague | 13 January 2026 | Tack, Gaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 0832

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2026

| Patent document cited in search report | | Publication date | Patent family member(s) | | Publication date |
|---|---|---|---|---|---|
| US 2019072074 | A1 | 07-03-2019 | CN | 109424497 A | 05-03-2019 |
| | | | DK | 3450745 T3 | 31-08-2020 |
| | | | EP | 3450745 A1 | 06-03-2019 |
| | | | ES | 2812277 T3 | 16-03-2021 |
| | | | US | 2019072074 A1 | 07-03-2019 |
| EP 3594493 | A1 | 15-01-2020 | NONE | | |
| WO 2015012124 | A1 | 29-01-2015 | JP | 6407592 B2 | 17-10-2018 |
| | | | JP | 2015042867 A | 05-03-2015 |
| | | | WO | 2015012124 A1 | 29-01-2015 |
| US 2013035198 | A1 | 07-02-2013 | EP | 2554841 A1 | 06-02-2013 |
| | | | ES | 2549583 T3 | 29-10-2015 |
| | | | US | 2013035198 A1 | 07-02-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024161475 A

- JP 2015140777 A